# EUROPEAN PATENT SPECIFICATION

(11) **EP 0 771 260 B1**
(45) Date of publication and mention of the grant of the patent: **08.12.1999**
(21) Application number: 95925834.4
(22) Date of filing: 03.07.1995
(51) Int. Cl.: B29C 33/14, B29C 63/04, B29C 45/14

(54) **METHOD AND DEVICE FOR FORMING A PLATE WITH AT LEAST ONE PROFILE EDGE AND A THUS MANUFACTURED PLATE**
VERFAHREN UND VORRICHTUNG ZUR HERSTELLUNG EINER PLATTE MIT WENIGSTENS EINEM PROFILIERTEN RAND UND DADURCH HERGESTELLTE PLATTE
PROCEDE ET DISPOSITIF DE FACONNAGE D'UNE PLAQUE PRESENTANT AU MOINS UN BORD PROFILE ET PLAQUE AINSI OBTENUE

(30) Priority: 19.07.1994 NL 9401185
(43) Date of publication of application: 07.05.1997
(73) Proprietor: ZODIAC EUROPE S.A., L-2960 Luxembourg (LU)
(72) Inventor: VAN ERVEN, Waltherus Joseph Maria, 5041 JE Tilburg (NL)
(74) Representative: Konings, Lucien Marie Cornelis Joseph
(86) International application number: EP9502608
(87) International publication number: WO9602374

(56) References cited:
- EP-A- 0 028 862
- US-A- 3 382 124

## Description

The invention relates to a method for manufacturing a composite plate as described in the preamble of claim 1.

Such a method is known from EP-0028862. A type of composite plate herein has a sharp edge which on the one hand is susceptible to damage but which on the other can still be manufactured according to the described method.

Another type of composite plate has a slightly U-shaped curved edge part which, because of its rounded form, is less susceptible to damage but which on the other hand it appears cannot be manufactured according to the method stated in EP-0026862.

The invention has for its object to provide a method and a device for manufacturing a composite plate which is not susceptible to damage. This method and device are stated in claim 1 and claim 5 respectively.

The characteristics and special features of the invention are elucidated in the description following hereinbelow with reference to the drawings.

In the drawings:
figures 1a, 1b, 1c show schematically three phases in the manufacture of a composite plate with use of the method according to the invention,
figure 2 shows a section of a composite plate with a profile edge manufactured with use of the method according to the invention,
figure 3 shows on enlarged scale detail III of figure 2 of two composite plates manufactured according to the invention,

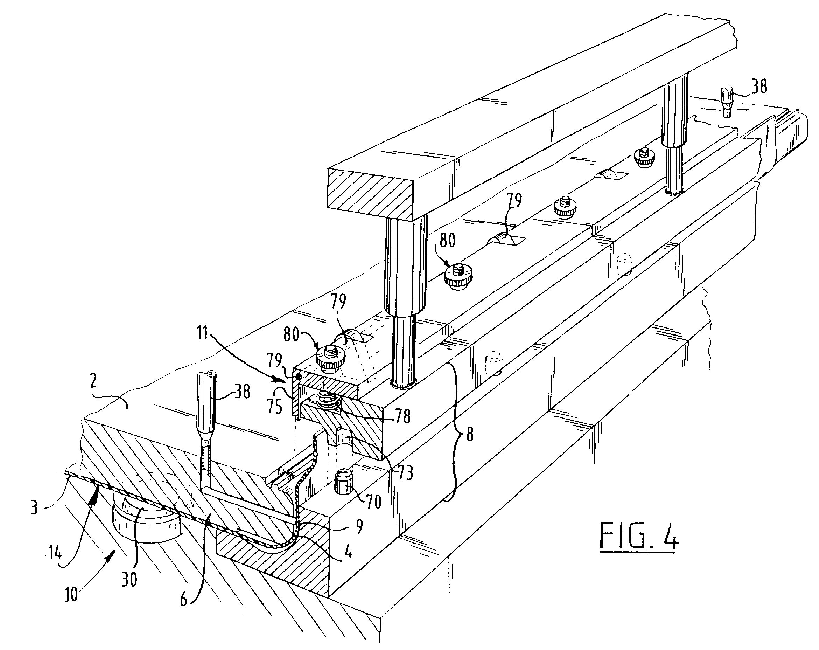

figure 4 is a partly broken away and partly sectional perspective view of a device for manufacturing a profile edge according to the invention during performing of the method according to the invention, and
figures 5 and 6 each show a cross section of the device of figure 4 in successive stages.

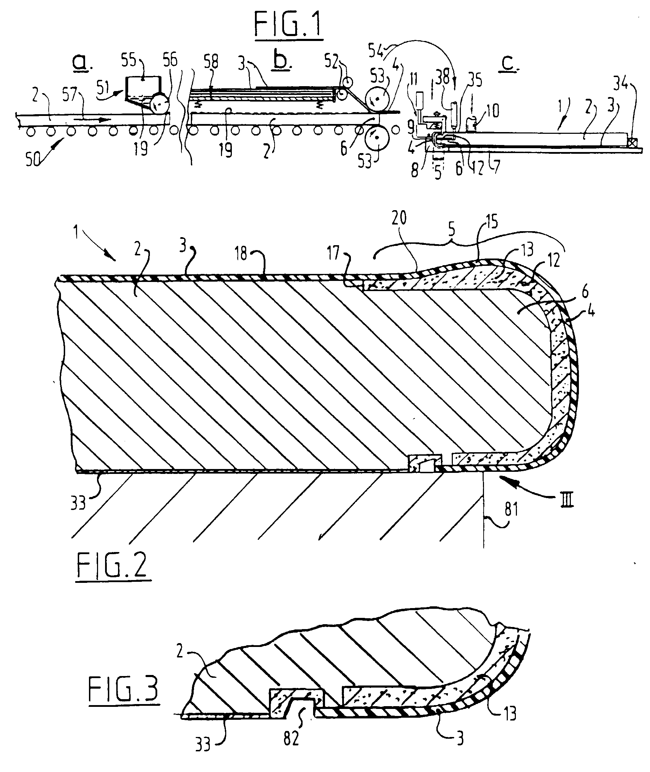

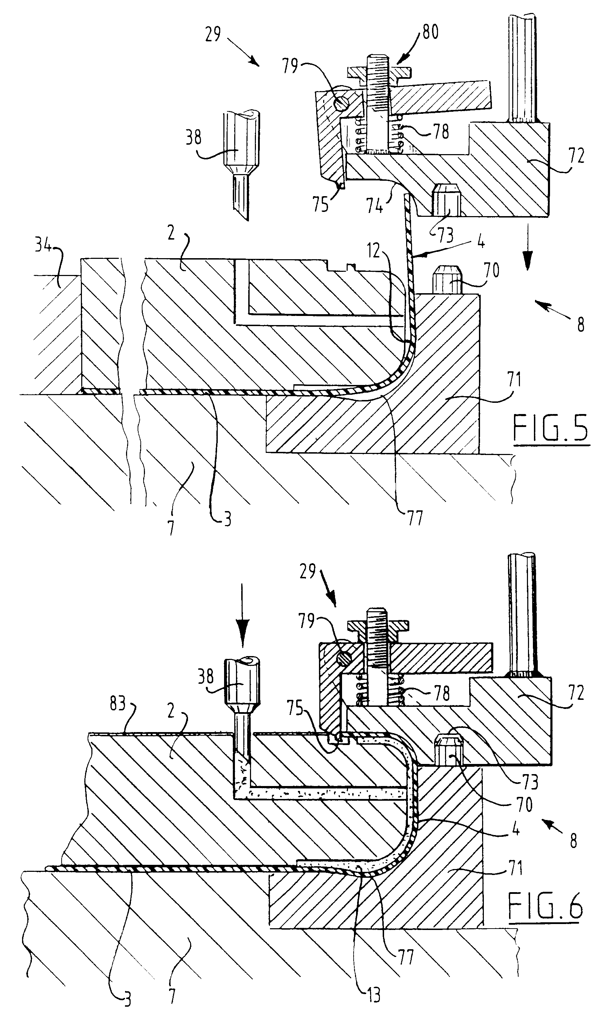

In figures 1a, 1b and 1c is shown how a composite plate 1 according to the invention is manufactured. A basic plate 2 is supplied on a transporting device 50. Basic plate 2 is manufactured for instance of metal or plastic, but preferably of wood-like material (chipboard, multi-ply) or recycling material such as foam. The glueing device 51 mounted above transporting device 50 applies glue 19 from a reservoir 55 onto basic plate 2 with a roller 56, while this basic plate 2 is moved forward in the direction of arrow 57. In a subsequent phase (figure 1b) a cover sheet 3 from a supply holder 58 arranged above the transporting device 50 is arranged on the basic plate 2 provided with glue 19. Cover sheet 3 is taken out of holder 58 by co-acting transport rollers 52 which carry the cover sheet 3 to the roller press 53, with which cover sheet 3 is pressed fixedly onto basic plate 2. The cover sheet 3 can be a foil, for instance a vinyl foil, as well as a sheet of plastic, veneer or metal. Cover sheet 3 is arranged such that an edge part 4 thereof protrudes outside the edge 6 of basic plate 2. The basic plate 2 with the cover sheet 3 partly connected thereto is then turned over (designated symbolically with arrow 54) and positioned on a table 7 against a stop 34 arranged a determined distance from a mould 8. The latter has a profile corresponding with the desired profile of profile edge 5. Basic plate 2 is then held fixedly on the table 7 by means of a plurality of suction cups 30 (see figure 5), only one of which is shown. The suction cups 30 engage with vacuum on the top surface 14 of smooth plastic of cover sheet 3. In order to ensure that the outer surface 9 of edge part 4 is everywhere properly placed against mould 8, positioning means 11 are arranged which are movable relative to mould 8 and which can press the edge part 4 in the mould 8. The space 12 bounded by the edge part 4 of cover sheet 3 and the edge 6 of basic plate 2 is now filled with a curable filler 13 which adheres to both plates. The filler 13 is supplied from a nozzle 38 of a filler supply device (not shown). When the space 12 is wholly filled with filler 13 the supply is stopped and the filler 13 allowed to cure. When this has taken place, the finished composite plate 1 can be removed from mould 8 and from table 7 after the positioning means 11 and the holding means 10 have been set into a rest position. Excess filler which may protrude from the surface 35 of basic plate 2 is later cut away.

Figure 2 shows a composite plate 1 manufactured with the method according to the invention which is intended to serve as sink unit draining board. This composite plate 1 comprises a profile edge 5. The profile edge 5 protrudes upward relative to the upper surface 14 of the composite plate 1. A water-retaining edge 15 is hereby formed which prevents water flowing off the composite plate 1 during use. The basic plate 2 consists in this case of multi-ply or pressed wood fibre board. Cover sheet 3 is a thermocuring plastic plate of a type which can be postformed. A property of this type is that chemically the plastic is not yet fully cured, whereby it can be made plastically deformable one again by heating it. The edge part 4 of cover sheet 3 is thus heated before being nestled against the mould 8.

At the position of profile edge 5 the shape of the edge 6 of basic plate 2 is roughly adapted to the profile of profile edge 5. Less filler 13 need hereby be used to fill the space 12 between the edge part 4 of cover sheet 3 and the edge 6 of basic plate 2. In this embodiment the surface of edge 6 transposes into connecting surface 18 via a transition surface 17 lying transversely of this connecting surface 18 of basic plate 2 to cover sheet 3. The advantage here is that glue which during joining of cover sheet 3 with basic plate 2 is pressed out between these two does not connect plates 2 and 3 to each other any further than is desired. Possible further connection would be possible if the surface of edge 6 were to connect without a transverse transition surface 17 to the connecting surface 18 between basic plate 2 and cover sheet 3. When in this latter case different amounts of glue are squeezed out between plates 2 and 3 at different locations, as is the case in practice, the curving 20 of the cover sheet 3 where it transposes into the water-retaining edge 15 would not form a straight line in the longitudinal direction of the composite plate 1. This is avoided by arranging the transverse transition surface 17.

A material which is particularly suitable as filler is polyurethane resin. This material cures very rapidly as a result of a chemical reaction between two components which are mixed immediately before the space is filled with the material.

Because the cover sheet 3 is twice bent through 90° the profile edge 5 also has a finished appearance when viewed at an angle from below, while the rounded edges are less likely to result in damage. The basic plate can be additionally covered by a bottom sheet of for instance moisture-proof foil 33.

Figures 5 and 6 show a device 29 for applying the method according to the invention. This device 29 is embodied for manufacturing a water-retaining edge as shown in figure 1c.

The mould 8 comprises a first mould part 71 connected to the table 7 and second mould part 72 movable in vertical direction thereof, each of which has a configuration such that they each bend the edge part 4 through 90°. Mould parts 71 and 72 are mutually centered by means of centering pins 70 and corresponding cavities 73.

When basic plate 2 is laid against a stop 34 the edge part 4 bends round as shown in figure 5. When mould part 72 is then carried downward the edge part 4 is bent round further by the concave inner wall 74 until it comes up against a stop 75. As mould part 72 descends further a pressure force is exerted continuously by the stop 75 on edge part 4 in its own plane such that edge part 4 is urged into the cavity 77 of mould part 71 which forms a retaining edge and into the concave inner wall 74 of mould cavity 72. In short, the edge part 4 nestles well against the whole inner wall of mould 8, wherein finally the stop 75 yields slightly counter to the spring force of springs 78 (figure 6). For this purpose the stop 75 is a continuous strip which can swivel on a horizontal hinge 79. The spring tension is adjustable by means of screw means 80. A small variation in width difference between sheet 3 and plate 2 is hereby absorbed. If desired, the spring tension can be obtained by means other than springs 78, such as pressurized air. The stop 75 is provided with a downward pointing nose which is received in the lengthwise groove in plate 2. On completion there results an indentation 82, see figure 3. When the draining board according to figure 2 lies on a sink unit 81 the indentation 82 frog stop 75 is no longer visible. Optionally, it is later filled.

The underside of the draining board optionally contains a moisture-proof foil 83.

## Claims

1. Method for manufacturing a composite plate (1) having at least one profile edge (5), with a basic plate (2) and a cover sheet (3) consisting for instance of a sheet of a thermocuring plastic of the postformable type, which cover sheet (3) is connected to the basic plate (2) in the following successive steps of:
a) cutting a profile at the basic plate at the edge part thereof where said profile edge (5) must be made;
b) partially connecting the cover sheet (3) to the basic plate (2) in a manner such that an edge part (4) of the cover sheet (3) protrudes outside the edge (6) of the basic plate (2), in the vicinity of which edge (6) the profile edge (5) must be formed;
c) optionally heating the protruding edge part (4) of the cover sheet (3);
d) deforming the protruding edge part (4) of the cover sheet (3) out of the plane of the already connected part of the cover sheet (3), wherein this edge part (4) is nestled against an inner wall of a mould (8) by exerting a pressure force on this edge part (4) substantially in the plane thereof;
e) filling with curable filler a space (12) which is bounded by the protruding edge part (4) of the cover sheet (3) and the edge (6) of the basic plate (2), which filler adheres to these two plates (2, 3);
f) curing the filler;
wherein in step c) the cover sheet (3) is deformed by nestling the edge part (4) of the cover sheet (3) with an outer surface against a mould (8) during energized and directed relative movement between positioning means (11) engaging on the edge part (4) and the mould (8), which has a concave inner wall;
**characterized in that** in step a) the basic plate is profiled at said edge part, wherein at least the lower edge of said edge part is so profiled that its shape is roughly adapted to the profile of the lower edge of the composite plate to be made, a groove is made into the lower side of said basic plate and wherein a downward extending ridge is remained between said groove and said profiled lower edge and that in step d) the edge part (4) of the cover sheet (3) is nestled against a U-shaped inner wall of the mould (8) by means of stop means (75) which are received in said groove of the basic plate (2).

2. Method as claimed in claim 1, **characterized in that** the pressure force is exerted with spring-mounted pressing means (75, 78).

3. Method as claimed in claim 1 or 2, **characterized in that** a mould (8) is used which has a first mould part (71) and a second mould part (72) and that the edge part (4) is bent round through approximately 90° in each mould part (71, 72).

4. Method as claimed in claim 3, **characterized in that** the edge part (4) is first bent through approximately 90° in a first mould part (71) and is subsequently bent through approximately 90° again by both mould parts (71, 72) being moved toward each other.

5. Device for manufacturing a composite plate with at least one profile edge (5) by applying the method of any of the foregoing claims, which device comprises:
connecting means for partially connecting a cover sheet (3) to a basic plate (2) in a manner such that an edge part (4) of the cover sheet (3) protrudes outside the edge (6) of the basic plate (2), in the vicinity of which edge (6) the profile edge (5) must be formed;
a carrier (7) for supporting the basic plate (2) with the cover sheet (3) partially connected thereto;
holding means (10; 30) which are connected to the carrier (7) for fixedly holding the connected plates (2, 3) on the carrier (7);
optional heating means for heating the protruding edge part (4); and
deforming means (71, 72, 75) for deforming the optionally heated, protruding edge part (4) of the cover sheet (3) out of the plane of the already connected part of the cover sheet (3);
a mould (8) which is connected to the carrier (7) and has the profile of the profile edge (5);
positioning means (11) for nestling the edge part (4) of the cover sheet (3) with an outer surface against the mould (8), which positioning means (11) comprise drive means for effecting a relative movement between the positioning means (11) and the mould (3), said positioning means (11) being adapted to exert a pressure force on the edge part (4) substantially in the curved plane of the edge part (4), characterized in that the mould (8) has a U-shaped inner wall, that said positioning means in combination with said U-shaped inner wall are adapted to exert a pressure force on the edge part (4) substantially bent into a U-shape such that the edge part (4) nestles against the U-shaped inner wall,
and that said positioning means (11) comprise stop means (75) extending downward beyond a top inner surface of said U-shaped mould.

6. Device as claimed in claim 5, **characterized by** spring-mounted positioning means (75, 78).

7. Device as claimed in claim 5 or 6, **characterized in that** the mould (8) has at least a first and a second mould part (71, 72) which are each adapted to cause deforming of the edge part (4) through approximately 90°.

8. Device as claimed in claim 7, **characterized in that** the mould parts (71, 72) are mutually movable in a direction substantially perpendicular to a carrier (7) of the basic plate (2).

9. Composite plate (1) manufactured as according to the method as claimed in any of the claims 1-4 having at least one profile edge (5), with a basic plate (2) and a cover sheet (3) consisting for instance of a sheet of a thermocuring plastic of the postformable type, which cover sheet (3) is connected to the basic plate (2), wherein at said profile edge (5) a filler is provided in a space between said basic plate (2) and said cover sheet (3), at least part of said space being created by profiling at least the lower edge of said basic plate (2), **characterized in that** at said profile edge (5) the cover sheet (3) has a U-shaped profile and that a groove is cut in the lower side of said basic plate (2) at a distance from said profiled lower edge.

## Patentansprüche

1. Verfahren zur Herstellung einer Verbundplatte (1) mit wenigstens einem Profilrand (5), mit einer Grundplatte (2) und einer Deckschicht (3), die beispielsweise aus einer Schicht aus einem wärmeaushärtenden Kunststoff des nachformbaren Typs besteht, wobei die Deckschicht (3) mit der Grundplatte (2) mit den folgenden aufeinander folgenden Schritten verbunden wird:
a) Schneiden eines Profils an der Grundplatte an deren Randabschnitt, an dem der Profilrand (5) ausgebildet werden soll;
b) teilweise Verbinden der Deckschicht (3) mit der Grundplatte (2) derart, daß ein Randabschnitt (4) der Deckschicht (3) über den Rand (6) der Grundplatte (2), in dessen Nähe der Profilrand (5) ausgebildet werden soll, vorsteht;
c) wahlweise Erwärmen des vorstehenden Randabschnitts (4) der Deckschicht (3);
d) Verformen des vorstehenden Randabschnitts (4) der Deckschicht (3) aus der Ebene des bereits verbundenen Teils der Deckschicht (3) heraus, wobei dieser Randabschnitt (4) durch Ausüben einer Druckkraft auf den Randabschnitt (4) im wesentlichen in dessen Ebene gegen eine Innenwand eines Formwerkzeugs (8) anliegt;
e) Füllen eines Raumes (12), der durch den vorstehenden Randabschhitt (4) der Deckschicht (3) und den Rand (6) der Grundplatte (2) begrenzt ist, mit einem aushärtbaren Füllstoff, wobei der Füllstoff an der Platte (2) und der Schicht (3) anhaftet;
f) Aushärten des Füllstoffes;
wobei in Schritt d) die Deckschicht (3) durch Anlegen des Randabschnitts (4) der Deckschicht (3) mit einer Außenfläche gegen das Formwerkzeug (8) während einer Krafrgetriebenen und gerichteten relativen Bewegung zwischen einer auf dem Randabschnitt (4) angreifenden Positioniervorrichtung (11) und dem Formwerkzeug (8), welches eine konkave Innenwand hat, verformt wird,
**dadurch gekennzeichnet**,
daß in Schritt a) die Grundplatte an dem Randabschnitt profiliert wird, wobei zumindest der untere Rand des Randabschnitts so profiliert wird, daß seine Form grob dem herzustellenden Profil des unteren Randes der Verbundplatte angepasst ist, ein Einschnitt in der Unterseite der Grundplatte vorgesehen wird, und wobei ein nach unten ragender Steg zwischen dem Einschnitt und dem profilierten unteren Rand verbleibt, und
daß in Schritt d) der Randabschnitt (4) der Deckschicht (3) gegen eine U-förmige Innenwand des Formwerkzeugs (8) mittels einer Anschlagvorrichtung (75), die in dem Einschnitt der Grundplatte (2) aufgenommen wird, anliegt.

2. Verfahren nach Anspruch 1,
**dadurch gekennzeichnet**,
daß die Drucksraft mit einer federgelagerten Andrückvorrichtung (75, 78) ausgeübt wird.

3. Verfahren nach Anspruch 1 oder 2
**dadurch gekennzeichnet**,
daß ein Formwerkzeug (8) benutzt wird, welches ein erstes Formteil (71) und ein zweites Formteil (72) aufweist, und daß der Randabschnitt (4) in jedem Formteil (71, 72) um etwa 90° gebogen wird.

4. Verfahren nach Anspruch 3,
**dadurch gekennzeichnet**,
daß der Randabschnitt (4) zuerst um etwa 90° im ersten Formteil (71) und anschließend wieder um etwa 90° durch beide Formteile (71, 72), die aufeinander zu bewegt werden, gebogen wird.

5. Vorrichtung zur Herstellung einer Verbundplatte mit wenigstens einem Profilrand (5) durch Anwenden des Verfahrens nach einem der vorhergehenden Ansprüche, mit einer Verbindungsvorrichtung zum teilweisen Verbinden einer Deckschicht (3) mit einer Grundplatte (2) derart, daß ein Randabschnitt (4) der Deckschicht (3) über den Rand (6) der Grundplatte (2), in dessen Nähe der Profilrand (5) ausgebildet werden
soll, vorsteht; einem Träger (7) zum Tragen der Grundplatte (2) mit der teilweise damit verbundenen Deckschicht (3);
einer Haltevorrichtung (10; 30), die mit dem Träger (7) verbunden ist, zum festen Halten der miteinander verbundenen Platte (2) und Deckschicht (3) auf dem Träger (7);
einer wahlweisen Erwärmvorrichtung zum Erwärmen des vorstehenden Randabschnitts (4);
einer Verformungsvorrichtung 871, 72, 75) zum Verformen des wahlweise erwärmten, vorstehenden Randabschnitts (4) der Deckschicht (3) aus der Ebene des bereits verbundenen Teils der Deckschicht (3) heraus;
einem Formwerkzeug (8), das mit dem Träger (7) verbunden ist und das Profil des Profilrands (5) hat;
einer Positioniervorrichtung (11) zum Anlegen des Randabschnitts (4) der Deckschicht (3) mit einer Außenseite gegen das Formwerkzeug (8), wobei die Positioniervorrichtung (11) eine Antriebsvorrichtung zum Bewirken einer relativen Bewegung zwischen der Positioniervorrichtung (11) und dem Formwerkzeug (8) aufweist, wobei die Positioniervorrichtung (11) geeignet ist, eine Druckkaft auf den Randabschnitt (4) im wesentlichen in der gekrümmten Ebene des Randabschnitts (4) auszuüben,
**dadurch gekennzeichnet**,
daß das Formwerkzeug (8) eine U-förmige Innenwand aufweist, daß die Positioniervorrichtung in Verbindung mit der U-förmigen Innenwand geeignet ist, eine Druckkraft auf den im wesentlichen in eine U-Form gebogenen Randabschnitt (4) derart auszuüben, daß der Randabschnitt (4) gegen die U-förmige Innenwand anliegt, und daß die Positioniervorrichtung (11) eine Anschlagvorrichtung (75) aufweist, die sich über eine obere Innenseite des U-förmigen Formwerkzeuges nach unten erstreckt.

6. Vorrichtung nach Anspruch 5,
**gekennzeichnet durch**
eine federgelagerte Positioniervorrichtung (75, 78).

7. Vorrichtung nach Anspruch 5 oder 6,
**dadurch gekennzeichnet**,
daß das Formwerkzeug (8) zumindest ein erstes und ein zweites Formteil (71, 72) aufweist, die jeweils geeignet sind, eine Verformung des Randabschnitts (4) um etwa 90° zu bewirken.

8. Vorrichtung nach Anspruch 7,
**dadurch gekennzeichnet**,
daß die Formteile (71, 72) gegenseitig in eine Richtung bewegbar sind, die im wesentlichen senkrecht zu dem Träger (7) der Grundplatte (2) ist.

9. Verbundplatte (1), die gemäß dem Verfahren nach einem der Ansprüche 1 bis 4 hergestellt ist, mit wenigstens einem Profilrand (5), mit einer Grundplatte (2) und einer Deckschicht (3), die zum Beispiel aus einer Schicht aus einem wärmeaushärtenden Kunststoff des nachformbaren Typs besteht, wobei die Deckschicht (3) mit der Grundplatte (2) verbunden ist, wobei an dem Profilrand (5) ein Füllstoff in einem Raum zwischen der Grundplatte (2) und der Deckschicht (3) vorgesehen ist, wobei zumindest ein Teil des Raumes durch Profilierung von wenigstens dem unteren Rand der Grundplatte (2) erzeugt ist,
**dadurch gekennzeichnet**,
daß an dem Profilrand (5) die Deckschicht (3) ein U-förmiges Profil bat und daß ein Einschnitt in die Unterseite der Grundplatte (2) in einem Abstand von dem profilierten unteren Rand geschnitten ist.

## Revendications

1. Procédé pour fabriquer une plaque composite (1) ayant au moins un bord profilé (5), avec une plaque de base (2) et une feuille de recouvrement (3) constituée, par exemple, d'une feuille de matière plastique thermodurcissable du type post-formable, laquelle feuille de recouvrement (3) est fixée sur la plaque de base (2) en procédant aux étapes successives suivantes consistant à :
a) découper un profil au niveau de la plaque de base au niveau de sa partie de bord, là où ledit bord profilé (5) doit être réalisé ;
b) fixer partiellement la feuille de recouvrement (3) sur la plaque de base (2) de manière à ce qu'une partie de bord (4) de la feuille de recouvrement (3) dépasse du bord (6) de la plaque de base (2), au voisinage duquel bord (6) le bord profité (5) doit être formé ;
c) chauffer facultativement la partie de bord saillante (4) de la feuille de recouvrement (3) ;
d) déformer la partie de bord saillante (4) de la feuille de recouvrement (3) hors du plan de la partie déjà fixée de la feuille de recouvrement (3), cette partie de bord (4) étant comprimée contre une paroi interne d'un moule (8) en exerçant une force de compression sur cette partie de bord (4) à peu près dans le plan qu'elle définit ;
e) remplir d'un agent de remplissage durcissable un espace (12) qui est délimité par la partie de bord saillante (4) de la feuille de recouvrement (3) et le bord (6) de la plaque de base (2), lequel agent de remplissage adhère à ces deux plaques (2, 3) ;
f) faire durcir l'agent de remplissage ;
dans lequel, à l'étape c), la feuille de recouvrement (3) est déformée en comprimant la partie de bord (4) de la feuille de recouvrement (3), avec une surface externe, contre un moule (8) durant un déplacement relatif stimulé et commandé entre des moyens de positionnement (11) s'engageant sur la partie de bord (4) et le moule (8), qui a une paroi interne concave ;
caractérisé en ce que, à l'étape a), la plaque de base est profilée au niveau de ladite partie de bord, dans lequel, au moins le bord inférieur de ladite partie de bord est profilé de manière à ce que sa forme soit grossièrement adaptée au profil du bord inférieur de la plaque composite à réaliser, une gorge est réalisée du côté inférieur de ladite plaque de base et dans lequel une arête s'étendant vers le bas subsiste entre ladite gorge et ledit bord inférieur profité et en ce que, à l'étape d), la partie de bord (4) de la feuille de recouvrement (3) est comprimée contre une paroi interne en forme de U du moule (0) par l'intermédiaire de moyens d'arrêt (75) qui sont reçus dans ladite gorge de la plaque de base (2).

2. Procédé selon la revendication 1, caractérisé en ce que la force de compression est exercée par des moyens de compression montés sur ressort (75, 78).

3. Procédé selon la revendication 1 ou 2, caractérisé en ce qu'un moule (8) est utilisé, lequel comporte une première partie de moule (71) et une seconde partie de moule (72) et en ce que la partie de bord (4) est pliée de manière à former un arrondi sur un angle de l'ordre de 90 degrés dans chaque partie de moule (71, 72).

4. Procédé selon la revendication 3, caractérisé en ce que la partie de bord (4) est tout d'abord pliée en formant un angle de l'ordre de 90 degrés dans une première partie de moule (71) et est ensuite pliée en formant un angle de 90 degrés, à nouveau, par les deux parties de moule (71, 72) en faisant se rapprocher ces dernières l'une de l'autre.

5. Dispositif pour fabriquer une plaque composite avec au moins un bord profilé (5) en appliquant le procédé selon l'une quelconque des revendications précédentes, lequel dispositif comporte :
des moyens de fixation pour fixer partiellement une feuille de recouvrement (3) sur une plaque de base (2) de manière à ce qu'une partie de bord (4) de la feuille de recouvrement (3) dépasse du bord (6) de la plaque de base (2), au voisinage duquel bord (6) le bord profilé (5) doit être formé ;
un dispositif de support (7) pour supporter la plaque de base (2) avec la feuille de recouvrement (3) partiellement fixée sur celle-ci ;
des moyens de maintien (10 ; 30) qui sont reliés au dispositif de support (7) pour maintenir d'une manière fixe les plaques fixées (2, 3) sur le dispositif de support (7) ;
des moyens de chauffage facultatifs pour chauffer la partie de bord saillante (4) ; et
des moyens de déformation (71, 72, 75) pour déformer la partie de bord saillante (4), facultativement chauffée, de la feuille de recouvrement (3) hors du plan de la partie déjà fixée de la feuille de recouvrement (3) ;
un moule (8) qui est fixé sur le dispositif de support (7) et possède le profil du bord profilé (5) ;
des moyens de positionnement (11) pour comprimer la partie de bord (4) de la feuille de recouvrement (3), avec une surface externe, contre le moule (8), lesquels moyens de positionnement (11) comportent des moyens d'entraînement pour impartir un déplacement relatif entre les moyens de positionnement (11) et le moule (8), lesdits moyens de positionnement (11) étant adaptés pour exercer une force de compression sur la partie de bord (4) à peu près dans le plan incurvé de la partie de bord (4) ; caractérisé en ce que le moule (8) a une paroi interne en forme de U, en ce que lesdits moyens de positionnement, en combinaison avec ladite paroi interne en forme de U, sont adaptés pour exercer une force de compression sur la partie de bord (4) à peu près déformée sous la forme d'un U de sorte que la partie de bord (4) soit comprimée contre la paroi interne en forme de U,
et en ce que lesdits moyens de positionnement (11) comportent des moyens d'arrêt (75) s'étendant vers le bas au-delà d'une surface interne supérieure dudit moule en forme de U.

6. Dispositif selon la revendication 5, caractérisé en ce qu'il comporte des moyens de positionnement montés sur ressort (75, 78).

7. Dispositif selon la revendication 5 ou 6, caractérisé en ce que le moule (8) a au moins une première et une seconde partie de moule (71, 72) qui sont adaptées chacune pour provoquer une déformation de la partie de bord (4) d'un angle de l'ordre de 90 degrés.

8. Dispositif selon la revendication 7, caractérisé en ce que les parties de moule (71, 72) sont mutuellement mobiles dans une direction à peu près perpendiculaires à un dispositif de support (7) de la plaque de base (2).

9. Plaque composite (1) fabriquée conformément au procédé selon l'une quelconque des revendications 1 à 4 ayant au moins un bord profilé (5), avec une plaque de base (2) et une feuille de recouvrement (3) constituée, par exemple, d'une feuille de matière plastique thermodurcissable du type post-formable, laquelle feuille de recouvrement (3) est fixée sur la plaque de base (2), dans laquelle, au niveau dudit bord profilé (5), un agent de remplissage est introduit dans un espace libre entre ladite plaque de base (2) et ladite feuille de recouvrement (3), au moins une partie dudit espace étant créée en profilant au moins le bord inférieur de ladite plaque de base (2), caractérisée en ce que, au niveau dudit bord profilé (5), la feuille de recouvrement (3) a un profil en forme de U et en ce qu'une gorge est découpée du côté inférieur de ladite plaque de base (2) à une certaine distance dudit bord inférieur profilé.
